Europäisches Patentamt

European Patent Office

Office européen des brevets

(19)

(11) Numéro de publication: **0 124 463**
**A1**

(12) **DEMANDE DE BREVET EUROPEEN**

(21) Numéro de dépôt: **84450008.2**

(22) Date de dépôt: **19.03.84**

(51) Int. Cl.³: **G 03 B 27/32**, G 03 B 27/46

(30) Priorité: **24.03.83 FR 8305014**

(71) Demandeur: **S.A.R.L. PHOTOSYSTEME, Zone Industrielle de la Grave, F-31320 Escalquens (FR)**

(43) Date de publication de la demande: **07.11.84**
**Bulletin 84/45**

(72) Inventeur: **Ducos, Michel, 34 Avenue de Suisse, F-31520 Ramonville st Agne (FR)**

(84) Etats contractants désignés: **AT BE CH DE FR GB IT LI LU NL SE**

(74) Mandataire: **Ravina, Bernard, Cabinet Bernard RAVINA 24, boulevard Riquet, F-31000 Toulouse (FR)**

(54) **Ensemble tireuse développeuse automatique pour obtenir des épreuves photographiques à partir d'un négatif.**

(57) La présente invention concerne un ensemble tireuse développeuse automatique pour obtenir des épreuves photographiques à partir d'un négatif.

L'ensemble selon l'invention est constitué d'un dispositif de projection (1), d'une chambre noire d'exposition (7) dotée d'au moins un magasin (8) de matériau photosensible, d'un plan de projection (9), d'au moins un organe de découpe (10) et d'au moins un organe d'avancement (11), d'une développeuse (12) comprenant plusieurs cuves (13) de bain de traitement, d'un couloir de séchage (15) et d'une réserve de produits de traitement (16).

L'ensemble se caractérise essentiellement en ce que le dispositif de projection (1) est disposé parallèlement à la chambre noire d'exposition (7), que ladite chambre noire est placée au-dessus de la développeuse (12) et qu'un caisson (20) contenant le couloir de séchage (15) et la réserve de produits de traitement (16) est disposée sous le dispositif de projection (1) et contre la développeuse.

ACTORUM AG

ENSEMBLE TIREUSE DEVELOPPEUSE AUTOMATIQUE POUR OBTENIR DES EPREUVES PHOTOGRAPHIQUES A PARTIR D'UN NEGATIF.

La présente invention concerne un ensemble tireuse-développeuse automatique pour obtenir des épreuves photographiques à partir d'un négatif.

Il est connu pour obtenir des épreuves photographiques d'utiliser des machines permettant à partir d'un négatif d'isoler un matériau photosensible, de le découper puis de le développer par voie chimique. Mais de telles machines ne sont pas conçues pour agrandir les photos en plusieurs formats à partir d'un même négatif et de plus, sont d'un encombrement important.

La présente invention vise à obvier aux inconvénients ci-dessus en proposant un ensemble tireuse-développeuse permettant par la position des éléments constitutifs du dit ensemble les uns par rapport aux autres d'obtenir automatiquement à partir d'un négatif des épreuves photographiques et des agrandissements d'une manière très rapide et de présenter une très faible encombrement.

A cet effet, l'ensemble tireuse-développeuse selon l'invention comprend un dispositif de projection doté d'au moins une source lumineuse, d'au moins trois filtres soustractifs commandés de préférence par moteur, d'un passe vues, d'un dispositif optique et d'un couloir de projection, une chambre noire d'exposition comportant au moins un magasin de matériau photosensible en bande, un plan de projection, un organe de découpe et au moins un organe d'avancement du matériau contre et devant le plan de projection, une développeuse dotée de plusieurs cuves de bain de traitement dans lesquelles sont disposés des moyens d'entraînement du papier insolé et découpé à travers les dites cuves, un couloir de séchage et une réserve de produits de traitement.

00124463

Le dit ensemble selon l'invention se caractérise essentiellement en ce que le dispositif de projection est disposé parallèlement à la chambre noire, que la dite chambre noire est placée au-dessus de la développeuse et qu'un caisson contenant le couloir de séchage et la réserve de produit de traitement est disposé sous le dispositif de projection et contre la développeuse.

D'autres avantages et caractéristiques apparaîtront à la lecture de . la description et en se référant aux dessins annexés donnés à titre d'exemple non limitatif en lesquels :

- la figure 1 est une vue de face de l'ensemble tireuse-développeuse selon l'invention,

- la figure 2 est une vue de côté de l'ensemble selon l'invention,

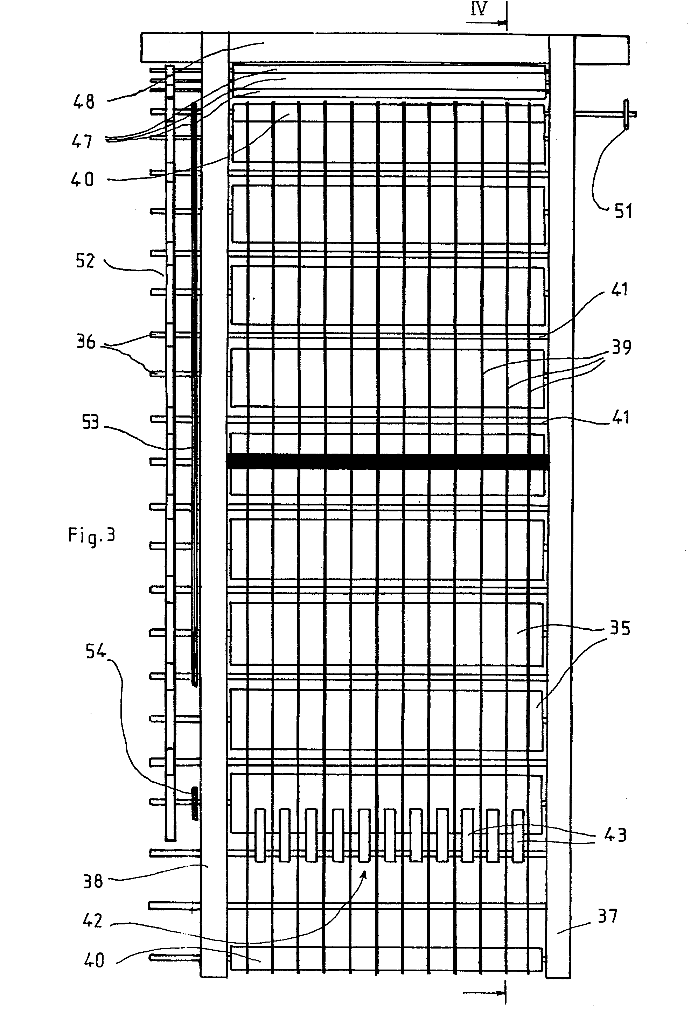

- la figure 3 est une vue de face des éléments d'entraînement dans la développeuse,

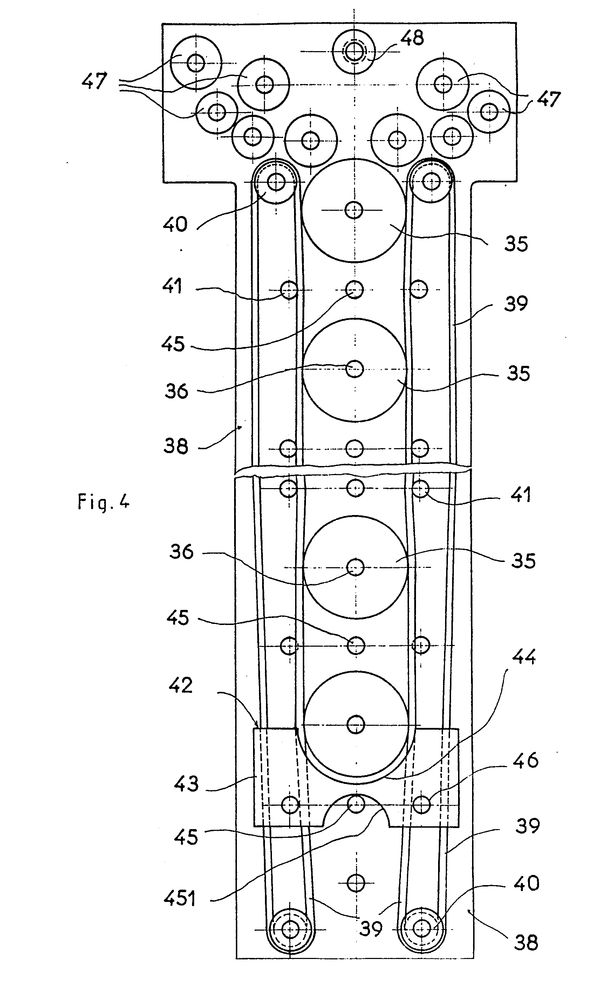

- la figure 4 est une vue en coupe suivant la ligne IV/IV de la figure 3.

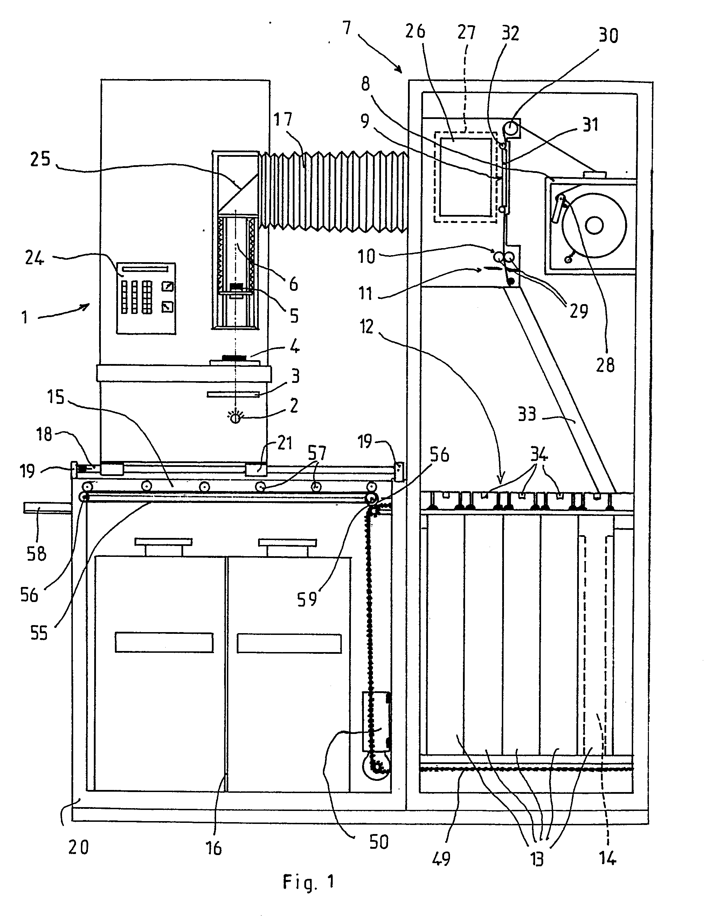

La présente invention concerne un ensemble tireuse-développeuse automatique pour obtenir des épreuves. photographiques à partir d'un négatif comme représenté en figure 1.

L'ensemble tireuse-développeuse selon l'invention est constitué d'un dispositif de projection 1 comprenant au moins une source lumineuse 2 placée sous au moins trois filtres soustractifs 3 commandés de préférence par moteur, un passe vues 4 dans lequel est déplacé le film négatif, un dispositif optique 5 et un couloir de projection 6.

Le dit ensemble comporte également une chambre noire d'exposition 7 dotée d'au moins un magasin 8 de matériau photosensible de préférence en bande, d'un plan de projection 9 perpendiculaire au faisceau de lumière provenant du dispositif de projection 1 et contre lequel est plaqué le dit matériau.

La dite chambre noire 7 comporte au moins un organe de découpe 10 et au moins un organe d'avancement 11 du matériau contre et devant le plan de projection 9.

La dévellopeuse 12 de l'ensemble selon l'invention comprend plusieurs cuves 13 de bains de traitement dans lesquelles sont disposés des moyens d'entraînement 14 du matériau insolé puis découpé dans la chambre noire 7, à travers les dites cuves.
L'ensemble tireuse-développeuse comprend également un couloir de séchage 15 et une réserve de produit 16.

Le dit ensemble selon l'invention se caractérise essentiellement en ce que le dispositif de projection 1 est disposé parallèlement à la chambre noire d'exposition 7, que la dite chambre noire est placée au-dessus de la développeuse 12 et qu'un caisson 20 contenant le couloir de séchage 15 et la réserve 16 de produits de traitement est disposé sous le dispositif de projection 1 et contre la développeuse 12. Par cette disposition, l'ensemble selon l'invention est très compact et présente donc un faible encombrement.

Selon une forme préférentielle de réalisation de l'ensemble selon l'invention, le dispositif de projection 1 est monté mobile perpendiculairement au plan de projection 9 de la chambre noire 7 sur le caisson et que le dispositif optique 5 est monté mobile perpendiculairement au plan du passe vues 4 et en synchronisme avec le déplacement du dispositif de projection 1, afin d'obtenir l'agrandissement et la netteté de l'image projetée sur le dit plan de projection.

Le dispositif de projection 1 est relié à la chambre noire 7 par un soufflet 17 dans lequel passe le faisceau de lumière provenant du dit dispositif de projection et permettant le déplacement de celui-ci par rapport au plan de projection 9 de la dite chambre noire.

4

Selon une forme préférentielle de réalisation de l'ensemble selon l'invention, le plan du passe vues 4 est disposé dans le dispositif de projection 1 perpendiculairement au plan de projection 9 de la chambre noire 7, et parallèlement au sens du déplacement du dispositif de projection 1 sur le caisson 20.

La translation du dit dispositif de projection est assurée de préférence par une vis mère horizontale 18 guidée en rotation dans des paliers 19 solidaires du caisson 20 contenant la réserve de produits de traitement 16 et le couloir de séchage 15. La vis mère 18 coopère avec le dispositif de projection 1 par des écrous 21 fixés latéralement sous le dit dispositif de projection.

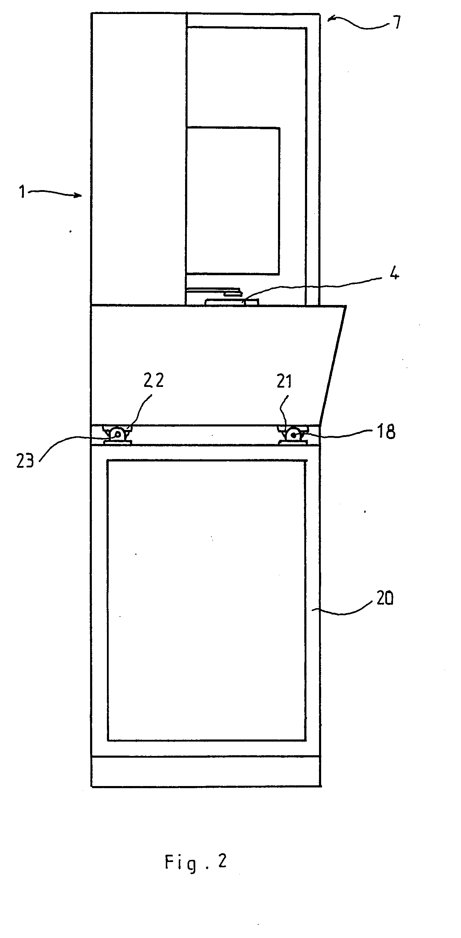

Avantageusement, le dispositif de projection 1 comporte, parallèlement à l'axe de la vis mère 18, un chemin de roulement ou une glissière 22 guidée dans un chemin de glissement 23 solidaire du caisson 20 (fig.2)

Le dispositif optique 5 est monté mobile perpendiculairement au sens de déplacement du dispositif de projection 1.
Ce déplacement est obtenu automatiquement par came afin d'obtenir la netteté de l'image dans la chambre noire 7.

La variation en hauteur du dispositif optique 5 est fonction du rapport d'agrandissement et est obtenue en synchronisme avec le déplacement du dispositif de projection 1.
Ce déplacement est obtenu par un moteur entraînant la vis mère 18.

Selon une forme préférentielle de réalisation, le synchronisme de ces déplacements est géré par un micro-processeur qui en fonction du rapport d'agrandissement affiché à partir d'un pupitre 24 placé de préférence sur le dispositif de projection 1, calcule le déplacement que doit effectuer le dispositif de projection 1 et la position en hau-

teur du dispositif optique 5 en fonction du dit rapport d'agrandissement affiché.

Dans le couloir de projection 6 du dispositif de projection 6 après le dispositif optique 5 est interposé un miroir de réflexion 25 incliné à 45° permettant de renvoyer l'image provenant du négatif sur le plan de projection 9 de la chambre noire 7 en passant dans le soufflet 17.
Le miroir 25 est placé à une distance du passe vues 4 apte à permettre d'obtenir de grands agrandissements.

Avantageusement, le passe vues 4 est monté rotatif sous le dispositif optique 5 afin d'obtenir sur le matériau photosensible en bande d'une largeur déterminée au moins deux formats d'agrandissements.
Par exemple, le passe vues 4 peut permettre d'obtenir des formats d'agrandissement tels que le 13 x 18 et 18 x 24 par simple rotation de 90° du dit passe vues sur un papier de mˆeme largeur que celui précédemment utilisé et par déplacement du dispositif de projection 1 et du dispositif optique 5 en fonction du rapport d'agrandissement désiré.

Le dispositif optique 5 est de préférence amovible et le dispositif de projection 1 est apte à accepter au moins trois types d'objectifs correspondant aux trois formats de négatifs existants.
Ainsi, l'ensemble selon l'invention permet d'obtenir un très grand nombre de formats d'agrandissement pour les différents types de négatifs.

L'avance du négatif, de préférence manuelle, est effectuée par tout moyen connu de l'homme de l'art.
Il va de soi que l'avance du négatif peut être également gérée automatiquement à partir par exemple du micro-processeur.

Les déplacements du dispositif de projection 1 et du dispositif opti-

que 5 peuvent également être obtenus manuellement à partir de moyens connus par exemple manivelle, crémaillère ou autres afin d'obtenir des images agrandies et nettes sur le plan de projection 9 de la chambre noire d'exposition 7.

La dite chambre noire est préférentiellement dotée de moyens de vérification du format d'agrandissement, du cadrage et de la netteté de l'image obtenue sur le plan de projection 9.

Selon une forme préférentielle de réalisation, ces moyens de vérification sont constitués par au moins un verre dépoli 26 disposé sur une des faces latérales de la chambre noire 7, afin d'^etre visible par l'utilisateur et éventuellement le client, et par au moins un miroir pivotable 27 monté dans la dite chambre noire.

L'axe de pivotement du miroir 27 est vertical et le dit miroir peut être actionné manuellement de l'extérieur par une poignée ou bien automatiquement à partir du pupitre 24 et par tout moyen connu par exemple électro-aimant.

Lors de l'exposition du papier photosensible au faisceau de lumière provenant du dispositif de projection, le miroir 27 est plaqué contre le verre dépoli 26 et assure ainsi l'étanche¨ité à la lumière.

Lors de la vérification, le dit miroir est interposé sur le faisceau de projection de manière à renvoyer une image sur le verre dépoli 26 . de préférence à 45° par rapport au dit verre dépoli.

Il va de soi qu'une butée d'arrêt permet d'obtenir la position correcte du miroir 27.

Ainsi l'image obtenue sur le miroir 27 est l'image inversée et de mê

00124463

me grandeur que celle qui sera obtenue sur le papier, ce qui permet de modifier facilement l'agrandissement en ayant toujours une vue réelle des dimensions et du cadrage du produit final.

L'image est impressionnée sur un matériau photosensible tel que du papier portant sur une de ses faces une émulsion photosensible.
Le dit papier se présente sous la forme d'un rouleau et est placé dans le magasin 8 dans la chambre noire 7.

Le dit magasin est de largeur suffisamment grande en sorte d'accepter un rouleau de papier de la largeur maximale existante.
Le rouleau de papier est facilement interchangeable et est maintenu dans le magasin par tout moyen connu permettant sa libre rotation.

Il va de soi que le rouleau de papier photosensible est protégé des rayons lumineux par un magasin 8 étanche à la lumière dans lequelle il est placé.

Avantageusement le dit magasin 8 comporte un système de freinage et de mise en tension 28 afin d'éviter tout déroulement intempestif du rouleau de papier dû à son inertie. Le dit magasin est placé dans la partie arrière de la chambre noire 7 derrière le plan de projection 9.

Le papier sort de préférence sur la partie supérieure du magasin 8 et est dirigé au-dessus du plan de projection 9, puis est orienté verticalement par un rouleau 30.

Des moyens d'avancement 10 du papier sont disposés au-dessous du plan de projection 9 et sont constitués de préférence d'au moins deux rouleaux 29 horizontaux, parallèles à l'axe du rouleau de papier, et en contact l'un avec l'autre.

00124463

Ces rouleaux 29 permettent de maintenir tendu le papier devant le plan de projection 9 et de faire avancer le dit papier après chaque temps d'exposition.

Afin que le papier ne présente pas de déformation lorsqu'il est devant le plan de projection 9, le dit papier est maintenu tendu devant et contre celui-ci.

A cet effet, en arrière du plan de projection, une plaque verticale 31 placée entre deux cylindres 32 horizontaux pousse en avant la bande de papier.

Celle-ci passant devant la plaque 31 et derrière les cylindres 32 est tendue et maintenue plaquée contre la dite plaque lors de l'avancée de celle-ci entre les cylindres 32.

Le papier après son exposition est avancé d'une longueur égale à la hauteur de l'image impressionnée puis est découpé par au moins un organe de découpe 10 disposé derrière les rouleaux d'avancement 29 du papier.

L'organe de découpe est constitué d'une manière connue en soi par une lame fixe et une lame mobile actionnée de préférence électriquement et en fonction de l'avance du papier.

Selon une forme préférentielle de réalisation, la découpe et l'avance du papier sont gérées par le micro-processeur qui en fonction du rapport d'agrandissement affiché sur le pupitre 24 calcule la longueur d'avancement du papier et la découpe du dit papier lorsque la longueur calculée a été avancée.

Après sa découpe, le papier ayant subi l'exposition, tombe par gravité dans la développeuse 12 située sous la chambre noire 7 en étant guidé par une goulotte 33 dans la dite chambre noire 7.

Préférentiellement la goulotte 33 est animée d'un mouvement de translation latéral au dessus de la développeuse 12 permettant la distribution du papier en différents points de la largeur de la développeuse 12.

De ce fait, la cadence d'avance du papier, d'exposition et de découpe peut être augmentée permettant ainsi d'obtenir un meilleur rendement de l'ensemble selon l'invention.

Le mouvement de translation de la goulotte 33 est obtenu par tout moyen connu de l'homme de l'art et la vitesse du dit mouvement peut être gérée par le micro-processeur en fonction de la cadence d'avance du papier.-

Le rétablissement de l'ordre des photos est effectué par un moyen qui sera décrit plus avant.

La dite développeuse est constituée de plusieurs cuves 13 de préférence de même hauteur et contenant les produits de traitement nécessaires au développement tels que révélateur, fixateur, eau et autres.

Les cuves 13 sont dotées chacune d'au moins une encoche 34 ménagée sur l'axe médian d'une paroi verticale fixée contre les parois latérales de chacune des dites cuves afin de les bloquer par lesquelles sont fixés les moyens d'entraînement 14.

Ces moyens d'entraînement sont des modules constitués de plusieurs éléments cylindriques parallèles rotatifs dans un même plan et d'au moins un élément actionné en translation dans un sens transversal à l'axe de rotation de chacun des dits éléments cylindriques.

Ces éléments cylindriques sont constitués par des rouleaux 35 solidaires chacun d'un arbre 36 guidé dans des paliers ménagés dans des flasques 37 et 38 parallèles.

Les rouleaux 35 selon l'invention sont régulièrement espacés et sont tous de même longueur et de même diamètre.

Le papier est introduit dans le premier module de manière à ce que la

face portant l'émulsion soit en contact avec les rouleaux 35.

L'élément actionné en translation est selon une forme préférentielle de réalisation constitué par une bande sans fin 39.

Avantageusement, le module comporte plusieurs bandes sans fin 39 parallèles.

Ces bandes sont montées entre deux arbres 40 guidés dans des paliers ménagés dans les flasques 37 et 38 et sont bloquées à espacements réguliers dans des rainures sur les dits arbres.

Ces arbres 40 sont parallèles à l'axe des rouleaux 35, sont disposés respectivement au-dessus du premier rouleau 35 et au-dessous du dernier, et de préférence l'arbre supérieur est entraîné en rotation.

Les bandes 39 sont actionnées de préférence perpendiculairement à l'axe de rotation des dits rouleaux.

Les dites bandes sont en contact avec les rouleaux 35 et sont pressées contre ceux-ci par des tiges cylindriques 41 montées folles dans des paliers réalisés dans les flasques, parallèles à l'axe de rotation des dits rouleaux et disposées dans la partie médiane de l'espace séparant les rouleaux 35.

Ces tiges 41 sont disposées de telle manière à pousser les bandes sans fin 39 entre deux rouleaux 35, ce qui a pour conséquence de les maintenir plaquées contre ceux-ci.

Les modules comportent également un ou plusieurs demi-cercles 42 entourant, sans être au contact, un rouleau 35.

Ces demi-cercles 42 sont disposés chacun entre deux bandes sans fin 39.

Les dits demi-cercles permettent de réaliser le changement de direction de la translation du papier dans le module.

Le papier suit dans chaque cuve un parcours dont la forme est sensiblement un "U" ; les modules comportent donc deux séries de bandes sans fin 39 disposées identiquement de part et d'autre des rouleaux 35.

Les demi-cercles réalisent la liaison entre le parcours descendant et ascendant du papier dans le module.

Selon une forme préférentielle de réalisation, les demi-cercles 42 sont amovibles sur le module et peuvent être placés indifféremment sous chacun des rouleaux.

Ceci permet de pouvoir modifier la longueur du parcours effectué par le papier dans le module et donc permet de régler le temps de passage du papier dans le bain de traitement.

Ces demi-cercles 42 sont constitués chacun d'une plaque 43 dans laquelle sont ménagés une encoche hemi circulaire 44 destinée à entourer un rouleau 35, un dégagement 45A dans lequel passe un arbre 45 dont le rôle sera expliqué plus avant, et deux orifices 46 dans lesquels passent les tiges de fixation.

Ces tiges de fixation sont fixées dans les paliers de tiges cylindriques 41 après retrait de la tige 41.

A l'entrée et à la sortie du module, le papier est guidé entre deux séries d'arbres 47 parallèles rotatifs disposés suivant deux arcs de cercles de rayons différents.

Les arbres 47 disposés sur l'arc de cercle de rayon plus faible sont de diamètre inférieur aux autres.

Les dits arbres 47 sont montés dans des paliers ménagés dans les flasques 37 et 38 qui sont de préférence en forme de "T".

La série d'arbres au niveau de la sortie du papier disposée sur l'arc de cercle de plus grand rayon peut comporter un arbre 47 supplémentaire afin que le papier sorte du module sensiblement perpendiculaire au plan de rotation des rouleaux 35.

Chaque module comporte sur sa partie supérieure et dans le plan de rotation des rouleaux 35 une entretoise 48 dépassant de part et d'autre du module afin de constituer le support du dit module en se plaçant dans l'encoche 34.

Il va de soi que les modules sont de largeur suffisante pour accepter des papiers de grand format et pour permettre la distribution de deux papiers sensiblement sur une même largeur obtenue par le mouvement de la goulotte 33.

Il va de soi que d'autres entretoises lient les deux flasques 37 et 38 du module mais ne dépassent pas sur les côtés de celui-ci.

Tous les modules de la développeuse 12 sont placés à la même hauteur et les éléments rotatifs de chacun des modules sont entraînés en rotation par une chaîne sans fin 49 actionnée par un moteur 50.

La chaîne sans fin 49 engrène sur chacun des modules sur au moins un pignon 51 solidaire d'un arbre.

Tous les arbres entraînés en rotation dépassent sur au moins un des côtés des modules.

Le mouvement imprimé par la chaîne sans fin 49 sur le pignon 51 est envoyé à tous les arbres rotatifs par une cascade d'engrenages 52.

Entre les engrenages fixés sur les arbres 36 des rouleaux 35 des engrenages intermédiaires portés par les arbres 45 permettent de maintenir le sens du mouvement.

Afin d'éviter les phénomènes d'arcboutement susceptibles de se produire sur la cascade d'engrenages 52, une chaîne sans fin 53 engrène sur au moins deux pignons 54 disposés de préférence derrière les engrenages du premier et du dernier rouleau 35.

Il va de soi que tous les éléments constituant les modules sont résistants aux produits corrosifs.

Le papier après son exposition et sa découpe est donc pris en charge par les éléments rotatifs du premier module de la développeuse 12 et est traité en passant dans les différentes cuves 13.

Le transfert d'une cuve à une autre se fait automatiquement par les séries d'arbres 47 qui sont proches les unes des autres d'un module à l'autre.

A la sortie de la développeuse le papier est séché.

Le couloir de séchage 15 est selon une forme préférentielle de réalisation horizontal dans le prolongement de la sortie du dernier module 14 de la développeuse et est disposé dans le caisson 20 au dessus duquel est monté mobile le dispositif de projection 1.

Le dit couloir de séchage comporte des éléments animés en translation et/ou en rotation.

Selon une forme préférentielle de réalisation le couloir de séchage comprend des bandes sans fin 55 tendues entre deux arbres 56 et qui sont disposés horizontalement sous des rouleaux 57 rotatifs dans un même plan horizontal et dont les axes de rotation sont perpendiculaires aux bandes 55.

Le papier sortant de la développeuse 12 est pris entre les dites bandes 55 et les rouleaux 57 et est acheminé vers une table de triage 58.

La dite table de triage est de préférence constituée d'un tapis sans fin animé en translation disposé perpendiculairement à la sortie du couloir de séchage 15 afin de rétablir l'ordre des photos précédemment modifié par déplacement de la goulotte 33 au dessus de la développeuse 12.

L'entraînement des bandes 55 et des rouleaux 57 est réalisé par la chaîne sans fin 49 actionnée par le moteur 50.

La dite chaîne 49 engrène sur un pignon 59 solidaire d'un des arbres 56.

Le mouvement est transmis à un rouleau 57 par engrenages et une cascade d'engrenages transmet le mouvement à tous les autres rouleaux 57.

Le séchage est de préférence réalisé par ventilation.

Il va de soi que le mouvement du tapis sans fin de la table de triage
58 peut être obtenu par l'association avec le mouvement des bandes
55.

Sous le couloir de séchage 15, dans le caisson 20 est placée la réserve 16 de produits de traitement.

Chaque réservoir est relié aux cuves de la développeuse 12 par des
pompes (non représentées).

Il va de soi que le présent ensemble selon l'invention comporte des
trop-pleins, des vidanges et tout autres accessoires.

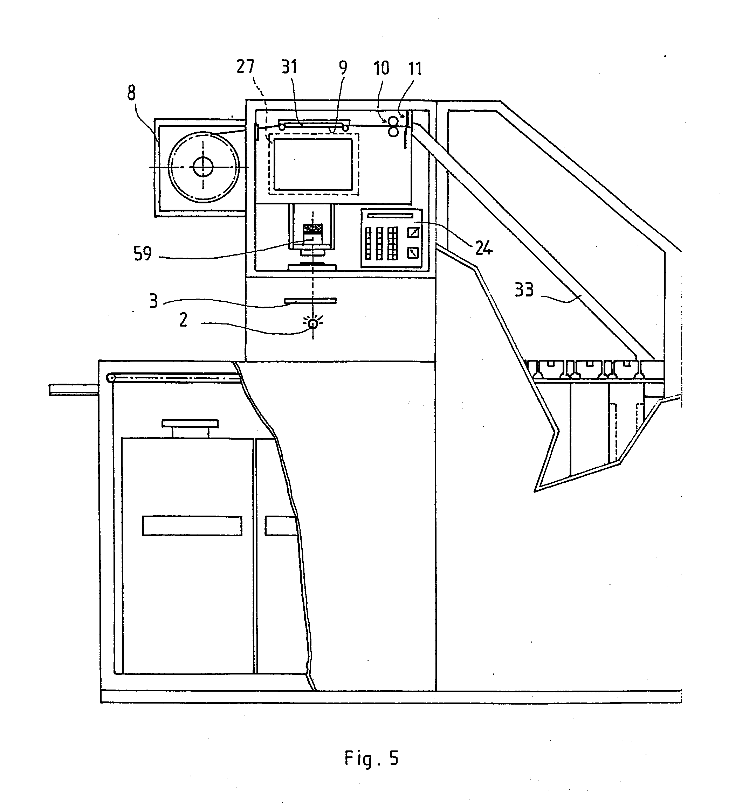

Selon une seconde forme de réalisation selon l'invention représentée
en fig.5, l'ensemble tireuse développeuse est doté d'un dispositif de
projection 1 fixe pouvant être disposé avantageusement sous la chambre noire d'exposition 7 comportant le magasin 8 de matériau photosensible,de la goulotte 33 par laquelle les épreuves tombant par gravité
sont guidées et distribuées dans la développeuse 12, la dite développeuse 12 est disposée contre le caisson 20 contenant le couloir de
séchage 15 et sur lequel est placé le dispositif de projection 1 et la
chambre noire 7.

Selon cette forme de réalisation l'agrandissement des épreuves est
obtenu par un "zoom" 59 disposé au dessus de la source lumineuse 2,
des filtres soustractifs 3 et du passe vues 4.

Le faisceau de projection peut se projeter sans être renvoyé par un
miroir sur le plan de projection.

L'agrandissement et la netteté sont obtenus directement par le "zoom"
qui est actionné automatiquement par exemple par came à partir du micro-processeur.

A titre d'exemple, le "zoom" est du type de ceux commercialisés par la

société "BETAVARON SCHNEIDER" et qui permettent en étant disposés à environ 650 mm du plan de projection d'obtenir à partir d'un négatif de format type 24 X 36 des épreuves photographiques format 71 X 108 jusqu'au format 230 X 350.

Il va de soi que tous autres éléments et caractéristiques énoncés dans la première forme de réalisation de l'ensemble conviennent à cette seconde forme de réalisation.

La présente invention permet d'obtenir automatiquement des épreuves photographiques à partir d'un négatif avec une très grande rapidité est de construction simple et présente un très faible encombrement.

Il va de soi que la présente invention peut recevoir tous aménagements et toutes variantes dans le domaine des équivalents techniques sans pour autant sortir du cadre du présent brevet.

REVENDICATIONS

1. Ensemble tireuse-développeuse automatique pour obtenir des épreuves photographiques à partir d'un négatif constitué d'un dis-. positif de projection (1) comprenant au moins une source lumineuse (2), au moins un filtre soustractif (3), un passe vues (4), un dispositif optique (5) et un couloir de projection (6), d'une chambre noire d'exposition (7) dotée d'au moins un magasin (8) de matériau photosensible en bande, d'un plan de projection (9), d'au moins un organe de découpe (10) et d'au moins un organe d'avancement (11) du matériau contre et devant le plan de projection (9), d'une développeuse (12) comprenant plusieurs cuves (13) de bain de traitement dans lesquelles sont disposés des moyens d'entraînement (14) du matériau insolé et découpé à travers les dites cuves, d'un couloir de séchage (15) et d'une réserve de produits de traitement (16) caractérisé en ce que le dispositif de projection (1) est disposé parallèlement à la chambre noire d'exposition (7), que la dite chambre noire est placée au dessus de la développeuse (12) et qu'un caisson (20) contenant le couloir de séchage (15) et la réserve de produits de traitement (16) est disposé sous le dispositif de projection (1) et contre la développeuse (12).

2. Ensemble tireuse-développeuse selon la revendication 1 caractérisé en ce que le dispositif de projection (1) est monté mobile perpendiculairement au plan de projection (9) de la chambre noire (7) sur le caisson (20) et que le dispositif optique (5) est monté mobile perpendiculairement au plan du passe vues (4) et en synchronisme avec le déplacement du dispositif de projection (1) afin d'obtenir l'agrandissement et la netteté de l'image projetée sur le plan de projection (9).

3. Ensemble tireuse développeuse selon la revendication 1 caractérisé en ce que le dispositif de projection (1) est monté fixe

et que le dispositif optique (5) est constitué par un "zoom" (59) permettant d'obtenir directement l'agrandissement et la netteté de l'image projetée sur le plan de projection (9).

4. Ensemble tireuse-développeuse selon les revendications 1 et 2 caractérisé en ce que le plan du passe vues (4) est disposé dans le dispositif de projection (1) perpendiculairement au plan de projection (9) de la chambre noire (7) et parallèlement au sens du déplacement du dispositif de projection (1) sur le caisson (20) et que le dispositif optique (5) est monté mobile perpendiculairement au sens du déplacement du dispositif de projection (1).

5. Ensemble tireuse-développeuse selon la revendication 1 caractérisé en ce que le dispositif de projection (1) est entraîné en translation par une vis mère (18) solidaire du caisson (20) contenant le couloir de séchage (15) et la réserve de produits (16).

6 Ensemble tireuse-développeuse selon la revendication 1 caractérisé en ce que un miroir de réflexion (25) est interposé dans le couloir de projection (6) du dispositif de projection (1),et est incliné à 45° afin de renvoyer l'image provenant du négatif sur le plan de projection (9) de la chambre noire (7) en passant dans le soufflet (17).

7. Ensemble tireuse-développeuse selon la revendication 1 caractérisé en ce que le passe vues (4) est monté rotatif sous le dispositif optique (5) afin d'obtenir sur le matériau photosensible en bande d'une largeur déterminée aux moins deux formats d'agrandissement

8. Ensemble tireuse-développeuse selon la revendication 1 caractérisé en ce que la chambre noire (7) est dotée de moyens de vérification du format d'agrandissement, du cadrage et de la netteté

de l'image obtenue sur le plan de projection (9).

9. Ensemble tireuse-développeuse selon les revendications 1 et 8 caractérisé en ce que les moyens de vérification sont constitués par au moins un verre dépoli (26) disposé sur une des faces latérales de la chambre noire (7) et par au moins un miroir pivotable (27) monté dans la dite chambre noire.

10. Ensemble tireuse-développeuse selon la revendication 1 caractérisé en ce que la chambre noire (7) est dotée d'une goulotte (33) assurant le guidage de la chute du papier insolé et découpé vers la développeuse (12).

11. Ensemble tireuse développeuse selon les revendications 1 et 10 caractérisé en ce que la goulotte (33) est animée d'un mouvement de translation latéral au dessus de la développeuse (12) afin de distribuer le papier en différents points sur la largeur de la dite développeuse.

12. Ensemble tireuse-développeuse selon la revendication 1 dont les éléments d'entraînement (14) dans les cuves (13) de la développeuse (12) comportent des rouleaux cylindriques parallèles (35) rotatifs dans un m^eme plan et des bandes sans fin (39) actionnées en translation perpendiculairement à l'axe de rotation des rouleaux (35) caractérisé en ce que les éléments d'entraînement (14) comportant des tiges cylindriques (41) montées folles parallèles à l'axe de rotation des dits rouleaux (35) et disposées dans la partie médiane de l'espace séparant deux rouleaux (35) de telle manière à maintenir les bandes sans fin (39) contre les dits rouleaux.

13. Ensemble tireuse-développeuse selon les revendications 1 et 12 dont les éléments d'entraînement (14) comportent des demi-cerc-

les (42) permettant le changement de direction de la translation du papier dans la cuve (13) caractérisé en ce que les dits demi-cercle (42) sont amovibles sur toute la hauteur du dit élément d'entraîn nement afin de pouvoir régler les temps de passage du papier dans le bain de traitement.

14. Ensemble tireuse-développeuse selon les revendications 1 et 12 caractérisé en ce que une chaîne sans fin (53) engrène sur au moins deux pignons (54) solidaires chacun d'un rouleau (35) afin d'é- viter les phénomènes d'arcboutement susceptibles de se produire sur la cascade d'engrenages (52) d'·entraînement des rouleaux (35).

15. Ensemble tireuse-développeuse selon la revendication 1 caractérisé en ce que le couloir de séchage (15) est horizontal et dans le prolongement de la sortie du dernier élément d'entraînement (14) de la développeuse (12).

16. Ensemble tireuse développeuse selon la revendication 1 comportant après le couloir de séchage (15) une table de triage (58) caractérisé en ce que la dite table de triage est constituée par un tapis sans fin animé en translation perpendiculaire à la sortie du couloir de séchage (15) afin de rétablir l'ordre des épreuves photo- graphiques modifié par la distribution de la goulotte (33) dans la développeuse (12).

00124463

PL I/5

Fig. 1

00124463

PL II/5

Fig. 2

PL Ⅲ/5

IV

48

47

40

52

36

53

Fig.3

54

38

42

40

51

41

39

41

35

43

37

IV

PL IV/5

Fig. 4

Fig. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | EP-A-0 064 015  (KIS FRANCE)<br>* Pages 3-13; figures 1-6 *<br><br>--- | 1,2 | G 03 B   27/32<br>G 03 B   27/46 |
| A | FR-A-  608 213  (A.M. JOSEPHO)<br><br>* Pages 2-7; figures 1-15 *<br><br>--- | 1,2,10,15 | |
| A | GB-A-  540 934  (KODAK LTD.)<br><br>* Pages 1-4; figures 1-3 *<br><br>--- | 1,2,4,6,8 | |
| A | DE-A-3 143 218  (FUJI PHOTO FILM CO.)<br>* Page  8, lignes 25-26; figures 1-3 *<br><br>--- | 6,9 | |
| A | US-A-2 913 974  (E.R. SABEL et al.)<br>* Colonnes 5-10; figures 1-3 *<br><br>--- | 14 | **DOMAINES TECHNIQUES RECHERCHES (Int. Cl. ³)**<br><br>G 03 B   27/32 |
| A | DE-A-2 549 775  (DAINIPPON SCREEN SEIZO K.K.)<br>* Pages 3-13; figures 1-6 *<br><br>----- | | G 03 B   27/46<br>G 03 D    3/12 |

Le présent rapport de recherche a été établi pour toutes les revendications

| Lieu de la recherche<br>LA HAYE | Date d'achèvement de la recherche<br>02-07-1984 | Examinateur<br>BOEYKENS J.W. |
|---|---|---|